# EUROPÄISCHE PATENTSCHRIFT

(11) **EP 0 947 738 B1**
(45) Veröffentlichungstag und Bekanntmachung des Hinweises auf die Patenterteilung: **02.05.2003**
(21) Anmeldenummer: 99104064.3
(22) Anmeldetag: 17.03.1999
(51) Int. Cl.: F16H 61/02

(54) **Automatisierte Schaltung der oberen Gänge eines Lkw-Getriebes**
Automatic shifting between the top speed ratios of a truck transmission
Passage de vitesses automatisé des rapports supérieurs d'une boîte de vitesses de poids-lourds

(30) Priorität: 01.04.1998 DE 19814624
(43) Veröffentlichungstag der Anmeldung: 06.10.1999
(73) Patentinhaber: MAN Nutzfahrzeuge Aktiengesellschaft, 80976 München (DE)
(72) Erfinder: Schaller, Karl Viktor, Dr.-Ing., 82194 Gröbenzell (DE); Kozel, Peter, Dipl.-Ing. (TU), 85235 Odelzhausen (DE); Drimml, Peter, Dipl.-Ing. (FH), 85757 Karlsfeld (DE); Maierhofer, Bernd, Dipl.-Ing., 81927 München (DE)

(56) Entgegenhaltungen:
- EP-A- 0 595 496
- EP-A- 0 633 155
- DE-A- 3 827 091
- DE-A- 4 438 914
- US-A- 5 730 682

## Beschreibung

Die Erfindung betrifft ein Verfahren nach dem Oberbegriff des Anspruches 1.

Nutzfahrzeuggetriebe, hauptsächlich für Fernverkehrs-Lastkraftwagen, werden oft mit verbrauchsorientierter Auslegung in Direktgang-Ausführung (letzter Gang i = 1,0) angeboten. Mit einer entsprechenden Achsübersetzung kann dadurch ein Fahrzeitanteil im letzten Gang auf Autobahnstrecken von etwa 85% erreicht werden.

Mit vollbeladenem Fahrzeug und auf mittelschweren Strecken (Verbrauchsteststrecken) lassen sich so günstige Verbrauchswerte erreichen. Für teilbeladene Fahrzeuge und/oder leichte Strecken können mit noch längerer Achsübersetzung einige Prozentpunkte Treibstoff gespart werden. Hierbei würde sich aber der Zeitanteil im direkten Gang reduzieren und so ein schlechterer Getriebewirkungsgrad den Vorteil zumindest verringern.

Viele Nutzfahrzeughersteller können es sich aus mehreren Gründen nicht erlauben, Overdrive-Getriebe, die mindestens im letzten Gang (z. B. der 16. oder der 12. Gang je nach Getriebehersteller) eine Übersetzung ins Schnelle haben (z. B. i = 0,84), aus dem Lieferprogramm zu streichen. Diese Overdrive-Getriebe (OD-Getriebe) haben aber den Nachteil, daß sie im Overdrive-Betrieb einen schlechteren Wirkungsgrad als im direkten Gang (i = 1,0) haben.

Ein Verfahren dieser Art, bei dem aber nur die Auswirkung des Schaltens der oberen Gänge vergleichbar ist, ist aus einem Test der Zeitschrift "Lastauto Omnibus", Heft 6, Juni 1997 auf den Seiten 12 bis einschließlich 17 bekannt.

Hier wird das Verhalten einer Schaltautomatik für ein Wechselgetriebe mit Overdrive im höchsten Gang beschrieben. Die Gangwahl ist so ausgelegt, daß der Dieselmotor immer auf niedrigster Drehzahl läuft. Bei einer Änderung der Leistungsanforderung schaltet das Getriebe sofort auf den entsprechenden Gang. Damit soll Treibstoff gespart werden. Da aber durch häufiges Schalten der Schaltautomatik entsprechende Zugkraftunterbrechungen erfolgen, wird das Gegenteil, nämlich ein Mehrverbrauch an Treibstoff erreicht. Der Testberichter schreibt (Seite 17, oben rechts, 9. Zeile):

"Ein guter Fahrer hat zwar schnell raus, wie einzugreifen ist, um solchen Unfug abzustellen. Wer nun aber gerade deshalb mit dem System liebäugelt, um auch einen weniger erfahrenen Piloten auf den Lkw setzen zu können, der kann sich ganz einfach mit einer relativ kurzen Achsübersetzung behelfen. Spezifiziert er die Achse so, daß der Zug mit gut 1.300/min oder noch höher bei Autobahntempo rollt, hilft er der Automatik vor allem auf mittelschweren Strecken schon richtig auf die Sprünge".

Es ist wohl nicht sinnvoll, das System einer Schaltautomatik mit einer nicht gemäßen Achsübersetzung zu korrigieren, um sich dann einen noch höheren Treibstoffverbrauch einzuhandeln.

Aufgabe der Erfindung ist es, die Gangwahl Overdrive (OD), i = < 1, oder Direktgang (DD), i = 1, mit mindestens einer Schaltautomatik für diese Gänge so auszuführen, daß durch den Gesamtwirkungsgrad Motor/Getriebe der Treibstoffverbrauch minimiert wird.

Die Aufgabe wird erfindungsgemäß durch die Merkmale des Anspruches 1 gelöst.

Dadurch, daß bei geringer Leistungsanforderung der OD geschaltet wird, was Rolletappen entspricht, wobei mindestens der Betriebsfall - Autobahngeschwindigkeit, leeres oder teilbeladenes Fahrzeug, horizontale Fahrbahn, Windstille - fahrbar sein muß, kann bei sehr niedriger Motordrehzahl gefahren werden.

Voraussetzung hierfür ist eine entsprechend lange Achsübersetzung, die mit der Übersetzung des OD die Fahrweise möglich macht. Der Nachteil des schlechteren Wirkungsgrades des OD wird durch den, absolut gesehen, niedrigen Verbrauch des Dieselmotors ausgeglichen.

Die Leistungsanforderung in den oberen Gängen erkennt der Bordrechner, abhängig von der Gaspedalstellung und der Fahrzeuggeschwindigkeit. Wenn sich bei einer bestimmten Leistungsanforderung durch Multiplikation von Punkten aus dem Motorund Getriebewirkungsgradkennfeld ein Verbrauchsvorteil für den DD ergibt, gibt der Bordrechner ein Signal an die Stellglieder, daß der direkte Gang geschaltet wird. Dieser Vorgang erfolgt ohne Zutun des Fahrers und bei mittlerer bis höherer Leistungsanforderung. Der DD bleibt nun solange eingelegt, solange der Fahrer über das Gaspedal die mittlere bis höhere Leistung bis hin zur Vollast anfordert.

Wenn der Fahrer merkt, daß die Motorleistung im DD nicht mehr ausreicht, oder aus Gründen des Straßenverkehrs die Geschwindigkeit reduziert werden muß, muß er manuell z. B. in den 14. Gang schalten.

Wenn im DD aber eine geringe Leistungsanforderung über das Gaspedal erfolgt, wird, veranlaßt durch den Bordrechner und ohne Zutun des Fahrers, zeitverzögert in den OD geschaltet. Eine Umschaltung in den OD erfolgt aber nur, wenn der Bordrechner im direkten Gang über Kriterien, wie dies für Rolletappen typisch ist, z. B. Fahrzeuggeschwindigkeit und Gaspedalstellung, eine Rolletappe ermittelt.

Die Umschaltung in den OD erfolgt zeitverzögert, z. B. abhängig aus der Höhe und Dauer der vorhergegangenen Leistungsanforderung. War die vorhergegarigene Leistungsanforderung hoch und für lange Zeit, so ist die Zeitverzögerung für eine Umschaltung in den OD relativ lang, während bei hoher Leistungsanforderung für eine kurze Zeit, die Zeitverzögerung für den Umschaltvorgang in den OD kurz ist.

Durch die erfindungsgemäße Fahrzeugauslegung und Schaltstrategie erreicht man, daß bei einer typischen Topographie bei vollbeladenem Fahrzeug der Anteil der Betriebsfälle mit mittlerem bis höherem Leistungsbedarf über den direkten Gang übertragen wird. Damit wird der Anteil der durchgesetzten Arbeit im direkten Gang gegenüber dem Anteil der durchgesetzten Arbeit im OD ein Mehrfaches sein.

Aus diesen Gründen wird der Treibstoffverbrauch sowohl für Rolletappen als auch für Strecken, auf denen Leistung vom Fahrzeug gefordert wird, immer optimiert sein.

## Patentansprüche

1. Verfahren zur automatischen Schaltung der oberen Gänge eines handschaltbaren Wechselgetriebes mit mindestens einem Overdrive-Gang (OD) und einem direkten Gang (DD) eines Nutzfahrzeugs, mit einem Bordrechner, mit einem Dieselmotor mit elektronisch geregelter Treibstoffzumessung (EDC), mit einer Gangkennungseinrichtung, mit automatisiert schaltender Kupplung zwischen Motor und Getriebe, **dadurch gekennzeichnet, daß** bei Rolletappen der Overdrive-Gang (OD) geschaltet ist, wobei die Übersetzung der Hinterachse und die Übersetzung des letzten Getriebeganges (Overdrive) insgesamt so ausgelegt ist, daß sich bei Autobahngeschwindigkeit eine gerade noch fahrbare, niedrige Motordrehzahl ergibt und bei mittlerer bis höherer Leistungsanforderung, wenn sich aus der Multiplikation des Motor- und Getriebewirkungsgradkennfeldes ein Verbrauchsvorteil für den direkten Gang (DD) ergibt, der direkte Gang (DD) geschaltet wird, der dann bis hin zur Vollast bleibt und bei wieder geringer Leistungsanforderung zeitverzögert verlassen und der Overdrive-Gang (OD) geschaltet wird.

2. Verfahren nach Anspruch 1, **dadurch gekennzeichnet, daß** abhängig von einem Verzögerungsgradienten, der die Verzögerung des Fahrzeugs ohne Antriebsleistung beschreibt und/oder einer vorhergehend vom Bordrechner ermittelten, geringen Leistungsanforderung im direkten Gang, wieder der Overdrive (OD) geschaltet wird.

3. Verfahren nach Anspruch 1 und 2, **dadurch gekennzeichnet, daß** sich die Zeitverzögerung für die Hochschaltung vom direkten Gang (DD) wieder in den Overdrive-Gang (OD) aus der Höhe und Dauer der vorhergegangenen Leistungsanforderung ergibt.

## Claims

1. A procedure for automatically shifting the higher gears of a manually-operable gearbox having at least one overdrive gear (OD) and one direct drive (DD) in a commercial vehicle having an onboard computer, a diesel engine with an electronic fuel injection control (EDC) system, a gear identification facility and an automatically-operating clutch between the engine and the gearbox, **characterised in that** the overdrive gear (OD) is engaged during rolling phases, the speed ratio setting of the rear axle and that of the last gear in the gear box (overdrive) being, in general, configured in such a fashion as to produce, when the vehicle is travelling at motorway speed, a low engine speed that it is just above the minimum feasible speed, and, if power requirements are in the medium-to-high range and if multiplication of the engine and gearbox efficiency characteristics results in a fuel consumption advantage for the direct drive (DD), to ensure that the direct drive (DD) is engaged and subsequently remains engaged up to full load, being disengaged again after a certain time-lag, the overdrive gear (OD) then being actuated if power requirements are reduced once again.

2. A procedure according to claim 1, **characterised in that**, depending on a deceleration gradient describing the vehicle's deceleration without any power input and/or a reduced power requirement when the vehicle is in direct drive (DD), as determined in advance by the onboard computer, the overdrive (OD) is re-engaged.

3. A procedure according to claims 1 and 2, **characterised in that** the time-lag for upshifting again from the direct drive (DD) into the overdrive gear (OD) results from the level and duration of the preceding power requirement.

## Revendications

1. Technique de commande automatique des rapports supérieurs d'une boîte de vitesses à commande manuelle d'un véhicule utilitaire comportant au moins une vitesse surmultipliée (« overdrive » ou OD) et une prise directe (« direct drive » ou DD), un ordinateur de bord, un moteur Diesel à dosage électronique de carburant (EDC), un dispositif d'identification de rapport et un embrayage à commande automatisée, **caractérisé en ce que** la surmultipliée (OD) est enclenchée en phases de marche sur l'erre, le rapport de l'essieu arrière et celui de la dernière vitesse de la boîte (overdrive) étant conçus au total de telle manière que l'on obtienne à vitesse d'autoroute un bas régime moteur encore juste acceptable et qu'à demande de puissance moyenne à supérieure, quand la multiplication des caractéristiques de rendement du moteur et de la boîte de vitesses donne un avantage de consommation à la prise directe (DD), celle-ci soit enclenchée, le reste alors jusqu'à la pleine charge et, quand la demande de puissance est à nouveau plus faible, soit quittée avec une certaine temporisation, pour réenclencher la vitesse surmultipliée (OD).

2. Technique suivant la revendication 1, **caractérisée en ce que** le réenclenchement de la surmultipliée (OD) s'opère en fonction d'un gradient de décélération décrivant la décélération du véhicule en l'absence de puissance de traction et/ou d'une faible demande de puissance en prise directe, déterminée temporairement par l'ordinateur de bord.

3. Technique suivant les revendications 1 et 2, **caractérisée en ce que** la temporisation de retour de la prise directe (DD) à la surmultipliée (OD) est donnée par l'ampleur et la durée de la demande de puissance antérieure.
